# EUROPEAN PATENT APPLICATION

(11) **EP 1 602 953 A1**
(43) Date of publication of application: **07.12.2005**
(21) Application number: 04425400.1
(22) Date of filing: 31.05.2004
(51) Int. Cl.: G02B 6/42

(54) **A package for housing at least one electro-optic element and the corresponding assembly method**

(71) Applicant: STMicroelectronics S.r.l., 20041 Agrate Brianza (Milano) (IT)
(72) Inventor: Fincato, Antonio, 28062 Cameri (Novara) (IT)
(74) Representative: Botti, Mario

(57) **Abstract**

A package (1) is described housing at least one electro-optic active element (2) for transmission by means of optical fibre (50) of the type comprising a bearing element (3) for such at least one electro-optic active element (2). Advantageously according to the invention, the package (1) is sandwich-like structured and it comprises a closing element (13) associated with the bearing element (3) by means of suitable aligning and coupling means (22) and apt to define a hermetically closed housing seat (23). Moreover, the closing element (13) houses a lens (20) in axial alignment with the electro-optic active element (2).

An electro-optic module (30) is also described of the type comprising such package (1) associated with a casing (31) comprising a receptacle (38) housing an optical fibre (50).

Finally, a method is described for assembling the package (1) housing the electro-optic active element (2).

## Description

### Field of application

The present invention relates to a package for housing at least one electro-optic active element, an electro-optic module, be it either a transmitter or a receiver, of the type used in the field of telecommunications by optical fibre transmission, and relative assembling method.

### Prior art

As it is well known, the recent years have seen the development of data transmission on optical fibres, in the technical field of telecommunications .

Optical fibres are used for transmitting information through light pulses, in the infrared field, by means of a very thin glass or plastic fibre cable. The pulses are transmitted from the centre of the fibre, called nucleus or "core", which is surrounded by a "cladding" or shell coating, preferably made of silicon oxide, which entraps the signals in the core. Optical fibres may be further coated by external protective layers called "jackets".

Optical fibres can be of the singlemode or multimode type, i.e. fibres capable of transmitting respectively a single signal, or light pulse, or more signals on the same core, such core having varying sizes, depending on the case..

The signals, or light pulses, are introduced into one end of the optical fibre by means of transmitters and, through subsequent reflections, they reach the opposite end where they are collected by suitable receivers.

Electro-optic modules are thus used for transmission, as they allow to couple transmitters and receivers, made of electro-optic active elements, to the optical fibre.

In particular, in the case of receivers, the electro-optic active element detects the optical radiations transmitted across the optical fibre connected therewith and it may comprise a photo-detector PIN diode or an APD (Avalanche Photo Detector).

Instead, in the case of a transmitter or optical source, the active element emits optical radiations onto the optical fibre connected therewith and it may comprise a Vertical Cavity Surface Emitting Laser (VCSEL) or a LED (Light Emitting Diode).

In both cases, the electro-optic module must provide a package for housing the electro-optic active element and to place it in optical connection with the optical fibre associated with the module itself.

The optical fibre may be permanently fixed onto the package by means of the common flexible metallic couplings, or it may be loosely associated to it by means of an optical connector and a suitable receptacle.

For a better communication and thus a better coupling between the electro-optic element and the optical fibre, a lens fixed on the package is interposed between them, which allows to suitably guide the light pulses coming from and/or addressed to the optical fibre.

Several solutions for the realisation of optical modules for telecommunications are known. For example US patent No. 5,337,398 in the name of Benzoni et al. filed on November 30, 1992 describes an electro-optic module comprising a package and a connector for an optical fibre. In particular, such package comprises a silicon substrate whereon a plurality of electro-optic elements connected to electric devices by means of suitable metallisations are placed. Alignment markers or fiducials are realised on the substrate in correspondence with the electro-optic elements for connecting a lens support and an optical fibre connector.

Another known solution, variously developed, is described in US patent No. 6,542,672B2 in the name of Jewell et al. filed on March 8, 2002 wherein an optical module comprises a package or first wafer which is associated below with a discrete electro-optic element, such element being in communication with an optical fibre, which is associated above with the package itself. The optical fibre is inserted in a suitable alignment recess realised on top of the first wafer or, alternatively, in a second wafer suitably connected with the first. The optical coupling is aided by a lens interposed between the electro-optic element and the optical fibre.

Moreover, European patent No. 0 413 489 A2 in the name of Pimpinella et al. filed on August 6, 1990 describes an optical module solution wherein the package comprises a bearing element having a first and a second surface and made of a material which allows the transmission of radiations. The bearing element has, starting from the first surface, a recess, which develops between the same two surfaces without, however, putting them in communication with one another. On the second surface an electro-optic active element is suitably associated and axially arranged with respect to the recess. A connector for the optical fibre is also provided comprising an element equipped with a receptacle apt to contain the optical fibre, which is secured by adhesive sealing means. During the assembly the first surface of the bearing element faces the connector, the recess being axially arranged in correspondence with the slot and with the electro-optic element.

Although advantageous under several aspects, the known solutions exhibit various drawbacks hereafter described.

First of all, these known solutions require complex optical module designs and/or complex assembly steps to ensure the alignment between the optical fibre and the optical module, or, more in particular, the electro-optic active element contained in such module. Moreover, several solutions require suitable metallisations to be carried out thus introducing additional processing steps and, thus, processing costs.

All of this limits the possibility of obtaining sealed environments, thus reducing the reliability of the optical module. Moreover, the modules made available by the prior art documents exhibit a components rigidity which forces and limits the typology of the elements which can be used in the module itself, which are thus rarely interchangeable with others on sale.

A further drawback of the prior art is given by the complexity of the assembly steps required to realise reliable optical modules. Such complexity is due to the need to carry out active alignments during the assembly step, i.e. to carry out suitable tests for verifying the alignment between the electro-optic active element and the optical fibre. Obviously, such complexity results in an increase in the realisation times and of the manufacturing costs of the module itself.

The technical problem underlying the present invention is that of devising a package which allows to obtain a sealed housing for an electro-optic active element and an electro-optic module capable of ensuring an efficient coupling between the electro-optic active element and the optical fibre as well as a simple and fast assembly method for realising an electro-optic module with a reliable alignment between the electro-optic active element and the optical fibre that overcomes the drawbacks mentioned with reference to the prior art.

### Summary of the invention

The idea of solution underlying the present invention is that of providing a package for housing an electro-optic active element for optical fibre transmission having a region, apt to house said active element, hermetically sealed, as well as interacting means apt to ensure correct alignment between the active element of the electro-optic module and the optical fibre associated therewith.

The idea of solution also provides the devising of an assembly method which can be implemented using commercial mass produced machinery capable of ensuring reliable alignment between the electro-optic active element and the optical fibre for optical modules manufactured on a large scale.

On the basis of such idea of solution, the technical problem is solved by a package of the type previously indicated, and defined by the characterising part of the herewith attached claim 1

Still on the basis of such idea of solution, the technical problem is solved by an electro-optic module of the type previously indicated, and defined by the characterising part of the herewith attached claim 24.

Moreover, on the basis of such idea of solution, the technical problem is solved by an assembly method defined by the characterising part of the herewith attached claim 32.

The characteristics and advantages of the package, of the electro-optic module and of the assembly method according to the invention will become apparent from the following description of embodiments thereof given by way of indicative and non-limiting examples with reference to the attached drawings.

### Brief description of the drawings

Figures 1 and 2 respectively show section and exploded views of a package realised according to the present invention;
Figures 3 and 4 respectively show top and section views of a bearing element according to the present invention;
Figures 5, 6 and 7 respectively show bottom, section and top views of a closing element;
Figure 8 shows an exploded view of an electro-optic module realised according to the present invention;
Figure 9 and 10 show section views of the electro-optic module of figure 8 with an optical fibre, respectively in external and inserted position;
Figures 11 and 12 show section and exploded views of a receptacle realised according to the present invention;
Figures 13, 14 and 15 show the package of figure 2 in different assembly steps of the method according to the present invention;
Figures 16 and 17 show a wafer comprising a plurality of packages realised according to the invention during an alignment test;
Figures 18 and 19 respectively show top and section views of a further embodiment of the bearing element of figure 3;
Figures 20 to 25 show respective views of a further embodiment of the closing element of figure 5;
Figures 26 and 27 show respective exploded and perspective views of the package of figure 13;
Figures 28, 29 and 30 show respective views of a first embodiment of the electro-optic module according to the present invention.

### Detailed description

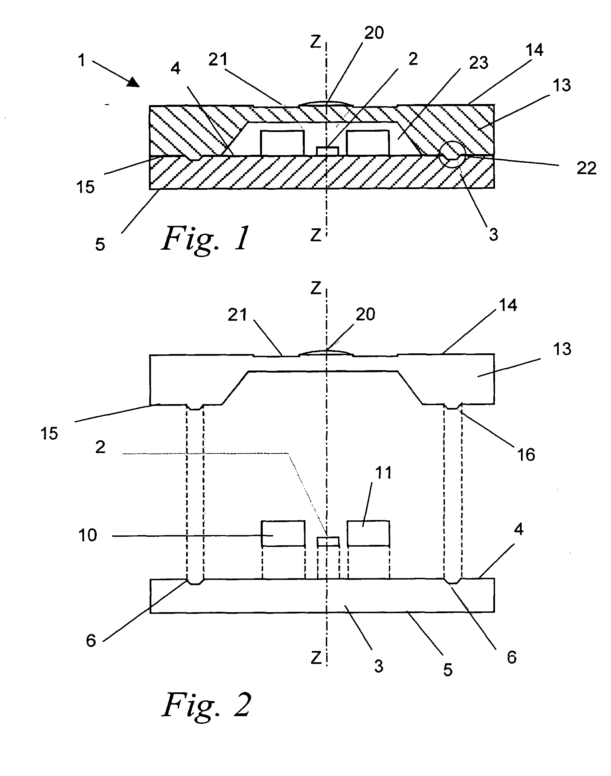

With reference to such figures, and in particular to the embodiment of figure 1, 1 globally and schematically indicates a package for housing at least one electro-optic element 2.

The package 1 has a substantially flat sandwich-like structure and has a vertical axis Z-Z. The word vertical is intended with reference to the orientation of the package 1 in the annexed figures.

The electro-optic element 2 can be a VCSEL, a PIN or a photo-detector, an APD or a LED depending on the functionality of the electro-optic module wherein such element is inserted.

The package 1 comprises a bearing element 3 preferably made of a silicon die, with an upper surface 4 and a lower surface 5. In a preferred embodiment, the silicon die is substantially flat and square-shaped.

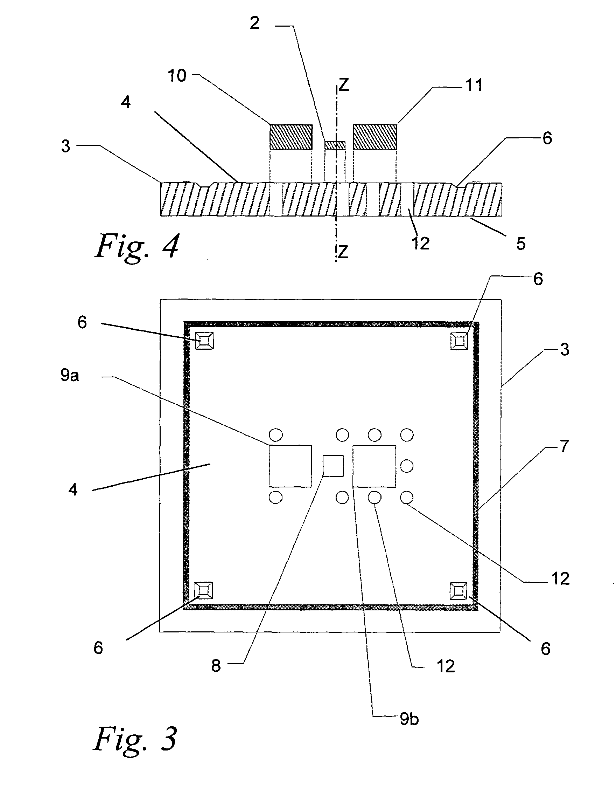

As it can be seen from figure 3, the upper surface 4 has a metallic pad 8 (substantially square-shaped in the figure embodiment) apt to enable the positioning and the fixing, by welding, of the electro-optic active element 2.

In the shown embodiment, the electro-optic active element 2 is preferably a VCSEL and another two electro-optic active elements, a PIN 10 or second electro-optic active element and a supplying driver 11 or third electro-optic active element, are present. For the sake of clarity, the electro-optic active element, the second and the third electro-optic active elements will be hereafter called active elements 2, 10 and 11.

The upper surface 4 has, in such case, a further pair of pads 9a and 9b (substantially square-shaped in the figure embodiment) each arranged symmetrically with respect to the pad 8, and apt to enable the positioning and the fixing of the active elements 10 and 11.

Preferably, the pad 8 and the pair of pads 9a and 9b are realised by photolithographic technique.

The bearing element 3 has, peripherally to the pad 8 and to the pair of pads 9a and 9b, a plurality of conduits or vias 12 passing between the upper surface 4 and the lower surface 5. The vias 12 enable the realisation of electric connections. The number and shape of the vias 12 can vary according to the type of package to be realised and to the operation thereof.

In particular the vias 12 are shaped and suitably filled with dielectric material so as to create a structure having a section similar to that of a coaxial cable and substantially conductive for transmitting a modulated electric signal even at high frequency.

Advantageously, according to the present embodiment, the electric contacts are placed on the lower surface 5 of the bearing element 3, opposed with respect to the surface 4 whereon the active elements 2, 10 and 11 are mounted. In this way, the assembly step of the package on the board is remarkably simplified.

Advantageously, according to the invention, the upper surface 4 has a first metallisation loop 7, square-shaped in the embodiment, arranged near a peripheral edge of the bearing element 3.

As can be seen from figures 3 and 4, the upper surface 4 has four alignment seats 6 arranged symmetrically with respect to the axis Z-Z and internally to the first metallisation loop 7, near the four corners thereof.

The number and conformation of the alignment seats 6 depend both on the technique used for realising them, and on the type of package to be obtained. Among the techniques used for this purpose there are the anisotropic wet etch and the plasma dry etch of the bearing element 3.

According to a preferred conformation, the seats 6 are realised by means of a wet etch which creates seats with pyramidal profiles following the crystalline planes of the silicon substrate used for realising the bearing element 3.

The four alignment seats 6 have, according to a preferred embodiment, a square-based frustum of pyramid shape originating from bearing element 3.

The package 1 comprises, advantageously according to the invention, a closing element 13 juxtaposed to the bearing element 3 and preferably realised on a silicon substrate different to the substrate of bearing element 3.

In this way, the closing element 13 and the bearing element 3 define a closed housing seat 23 for the active elements 2, 10 and 11.

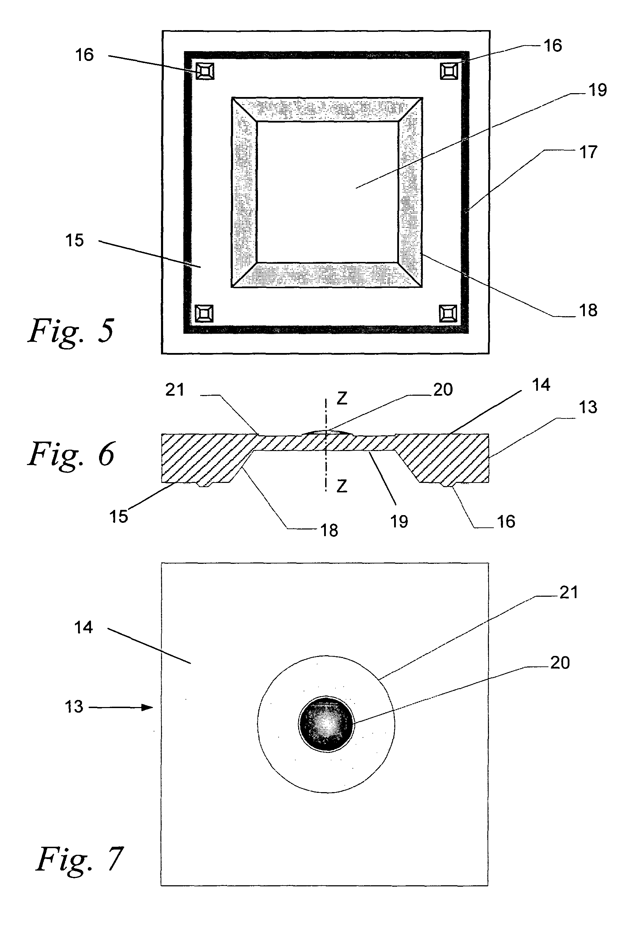

In particular, the closing element 13 has an upper surface 14 and a lower surface 15. The lower surface 15 is preferably square-shaped and comprises, in correspondence with the four corners thereof, four projections 16 of a shape conjugated to the alignment seats 6 of the bearing element 3, as shown in the figures 5 and 6.

Such projections 16 are symmetrically arranged with respect to the axis Z-Z.

In this way the interaction between the four projections 16 and the alignment seats 6 ensures, in a simple and lasting manner, the reciprocal positioning between the bearing element 3 and the closing element 13.

The lower surface 15 has, moreover, a cavity 18 axially made with respect to the axis Z-Z, with square based frustum of pyramid shape. Preferably the cavity 18 has a depth p greater than a maximum height h between the active elements 2, 10 and 11.

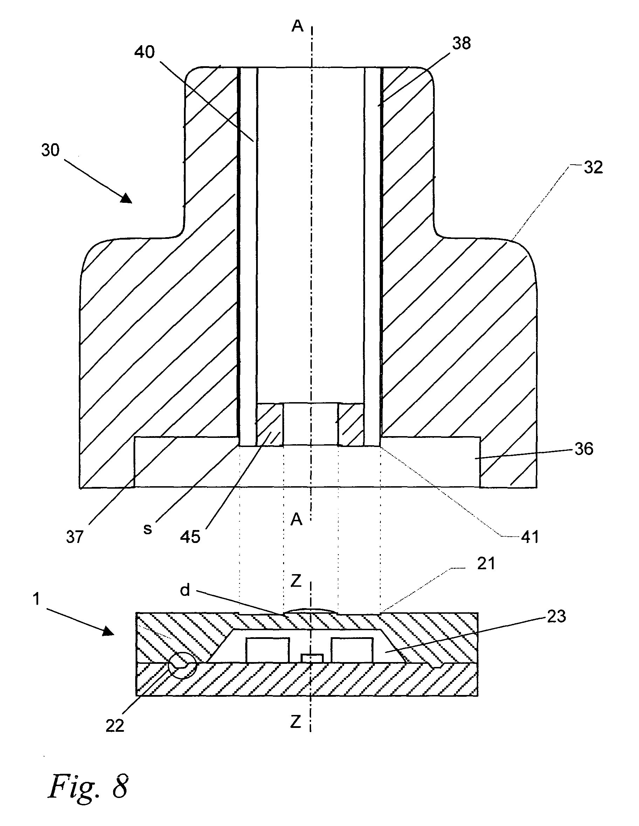

According to the present embodiment the cavity 18 forms the housing seat 23, as shown in figure 8.

The four projections 16 and the cavity 18 are preferably realised by means of anisotropic wet etches.

The cavity 18 has an inner surface 19 preferably coated, by deposition, of a non-reflective material.

The lower surface 15 of the closing element 13 also has a second metallisation loop 17, which is juxtaposed to the first loop 7 of the bearing element 3 when the closing element 13 is placed above the bearing element 3.

In such way, the coupling between the first loop 7 and the second sealing loop 17, possibly by interposing welding paste, ensures the hermetic closure between the bearing element 3 and the closing element 13 themselves, and thus the hermetic sealing of the housing seat 23 they define.

The closing element 13 also has, on the upper surface 14, a lens 20 and, peripherally thereto, a recess 21, for example shaped as a circular crown, both axially arranged with respect to axis Z-Z, as shown in figure 7.

Suitably, the recess 21 has a depth d of an appropriate and defined value.

The lens 20 maybe refractive or diffractive depending on the typology of package 1 to be realised and it is obtained by means of known techniques: plasma etch by means of grey-scale mask, direct writing, holography, controlled density and temperature fotoresist for generating a lenticular surface then used as hard mask of variable thickness.

The recess 21 maybe realised simultaneously with the lens 20, or in a previous or subsequent step.

For the package 1, the cavity 18 forms the housing seat 23 for the active elements 2, 10 and 11; the four projections 16 and the four seats 6 realise coupling and alignment means 22, moreover, the first 7 and the second metallisation loop 17, possibly by interposing welding paste, ensure the hermetic sealing thereof.

In particular, the interaction between the seats 6 and the projections 16 ensures a mechanical alignment with such precision as to allow a passive optical alignment, i.e. without light transmission, through the involved optical elements. The first and second juxtaposed metallisation loops 7 and 17 allow such a welding as to make the housing of the active components inside the housing seat 23 hermetic, which thus results hermetically sealed.

The thus obtained package 1 ensures the alignment between the lens 20 and the electro-optic active element 2 with tolerances of the photolithographic type. In fact, the electro-optic active element 2 is placed by a pick-and-place machine which ensures a maximum error lower than 1 µm, whereas the optical coupling and alignment means 22 ensure maximum misalignments of the photolithographic type, thus constituting the maximum global alignment tolerance of the package 1.

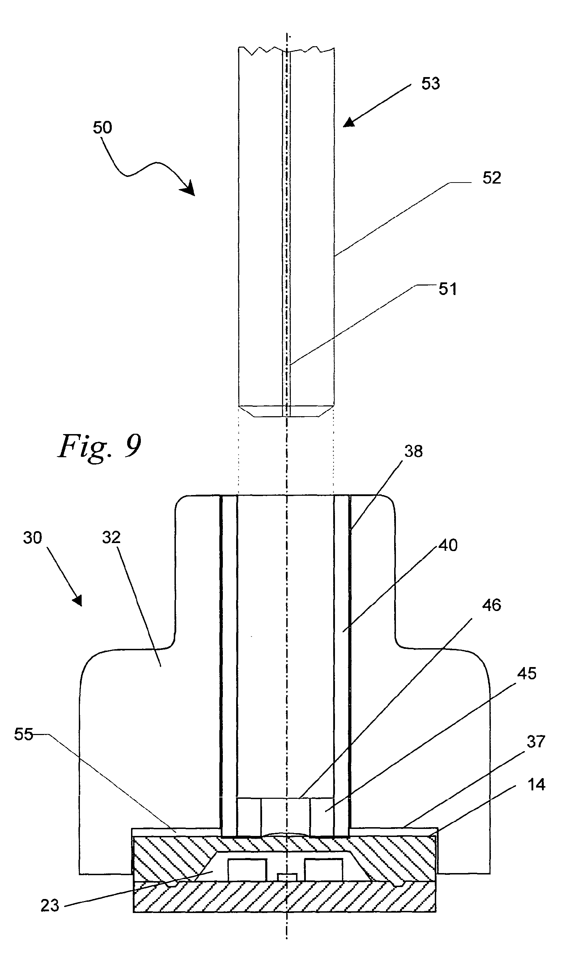

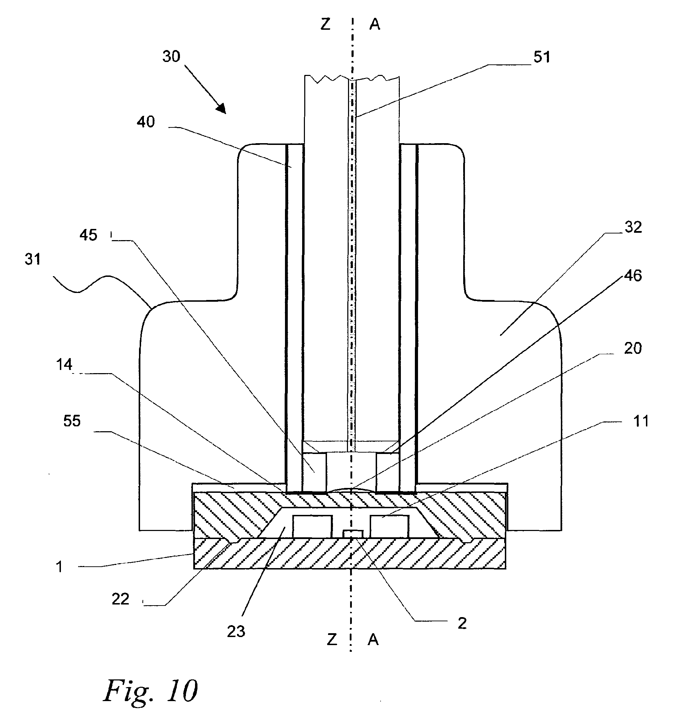

The invention also relates to an electro-optic module 30, shown in figures 9 and 10, and used for housing and associating an optical fibre 50 with package 1, the latter being realised according to the above indicated description.

Hereafter, for what concerns the package 1, the same numeric references as above will be used for indicating corresponding parts.

The cylinder-shaped optical fibre, of the standard type,, comprises a core, apt to transmit light pulses, surrounded by a coat or shell, which allows to protect these pulses from possible distortions. In particular, figure 9 shows an end part 53 of any optical connector associated with an optical fibre 51 inserted in a fibula 52 and hereafter, for convenience, globally indicated as optical fibre 50.

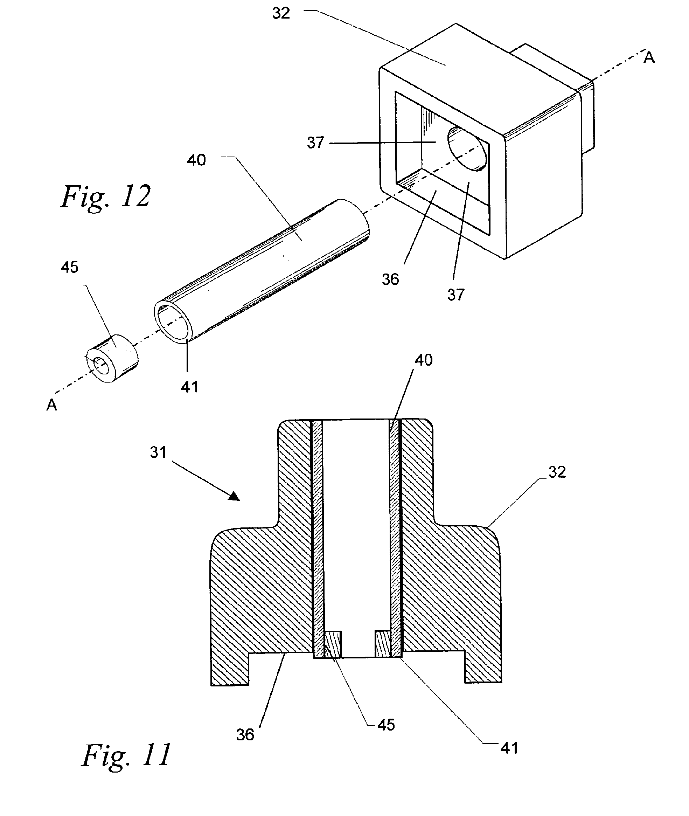

The electro-optic module 30, as shown in figures 11 and 12, has a casing 31 which comprises a mechanical bearing body 32, the shape, size and composition of which depend on the application wherein the optical fibre 50 is used.

The bearing body 32 also has a parallelepiped-shaped box-like seat 36, apt to fittingly house, at least partially, the package 1.

The casing 31 also has an axial alignment sleeve 40 for the optical fibre 50 which can be precisely inserted in a receptacle 38, the correct alignment being ensured by the axial alignment sleeve 40, advantageously available for purchase at low cost.

As shown in figure 8, the sleeve 40 is slightly longer than the receptacle 38 and thus a lower end 41 projects from the inner surface 37 by an appropriate previously calculated value s. Suitably, the value s is greater than the depth d of the recess 21 realised on the closing element 3 of the package 1.

Advantageously, moreover, the casing 31 has a cylindrical spacer 45 fittingly inserted from the lower end 41 of the sleeve 40 and aligned below it. The spacer 45 has an axial hole 46 of the same size as the diameter of the lens 20 of the package 1 and of height equal to the axial distance of the position of an image plane of the lens 20 itself.

In this way, the spacer 45 forms, internally to the sleeve 40, an abutting plane 46 for the end of the optical fibre 50 inserted into the sleeve 40.

According to a preferred embodiment, the package 1 is precisely and axially inserted in the box-like seat 16 of the bearing body 32 with its upper surface 14 facing the inner surface 37 of the body 32. In this way, the axis Z-Z and the axis A-A are aligned. The lower end 41 of the sleeve 40 and the spacer 45 are inserted in the precision recess 21 and an air space 55 is obtained between the upper surface 14 and the inner surface 37. Suitably, the height of the air space 55 is equal to the difference between the projection of the sleeve 40, value "s", and the depth of recess 21, "d".

It should be noted that the box-like seat 36 allows, if present, an approximate pre-alignment between the package 1 and the body 32, such box-like seat not being strictly necessary for the realisation of the module 30. The correct alignment of the optical elements is in fact ensured by the mechanical alignment of the sleeve 40 inside the recess 21, as shown in figure 8. This alignment is possible and sufficient as the recess 21 is obtained photolithographically and it is aligned to the lens 20, whereas the sleeve 40 is normally manufactured, by now, at an industrial level on large scale and at low cost with very good tolerances of the sizes thereof (external diameter, internal diameter, thickness, concentricity).

The bearing body 32 may also be fixed to the package 1 by means of welding paste or resin, not indicated in the figure, and placed in correspondence with the air space 55.

In the thus realised electro-optic module 30, the lower end 41 of the sleeve 40 and the spacer 45 in interaction with the recess 21 as well as the box-like seat 36 realise coupling and reciprocal alignment means 59 and they allow to hermetically associate the casing 31 with the package 1.

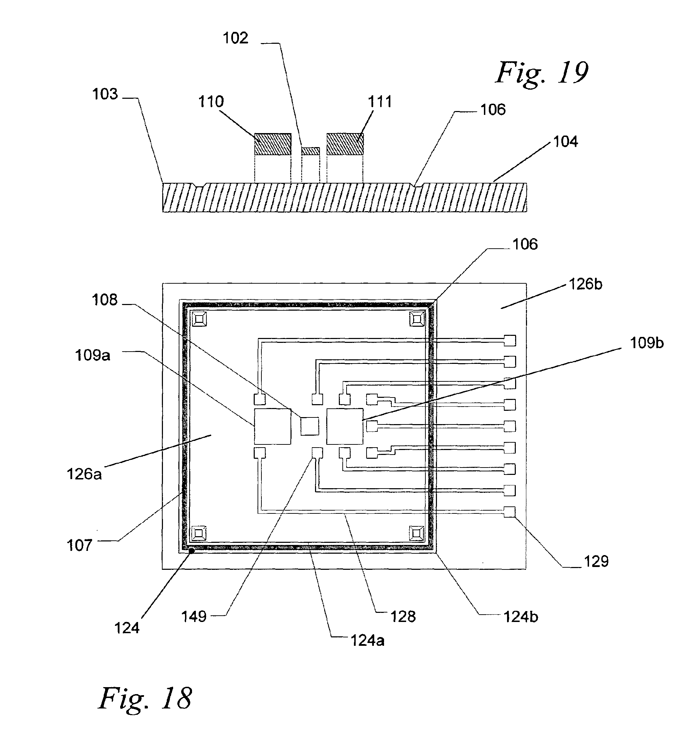

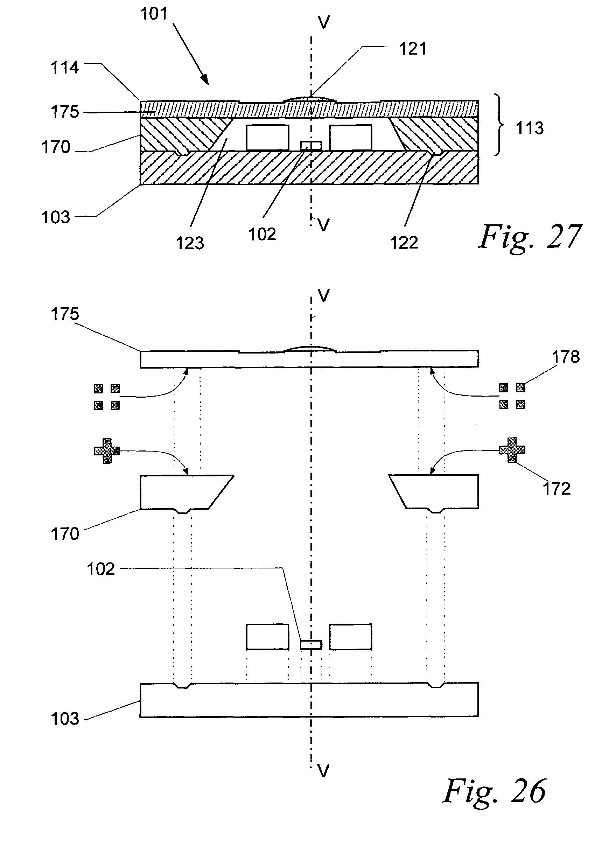

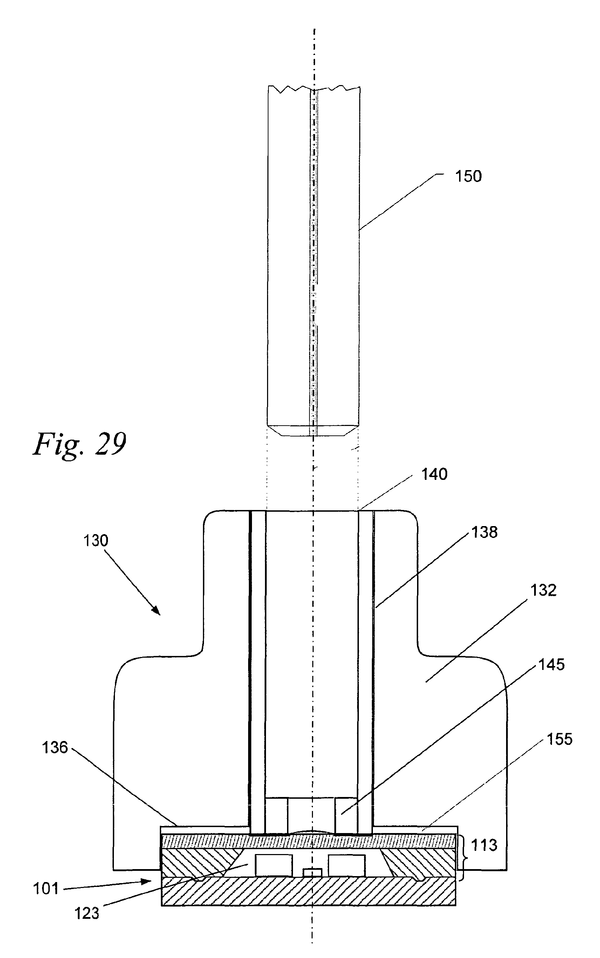

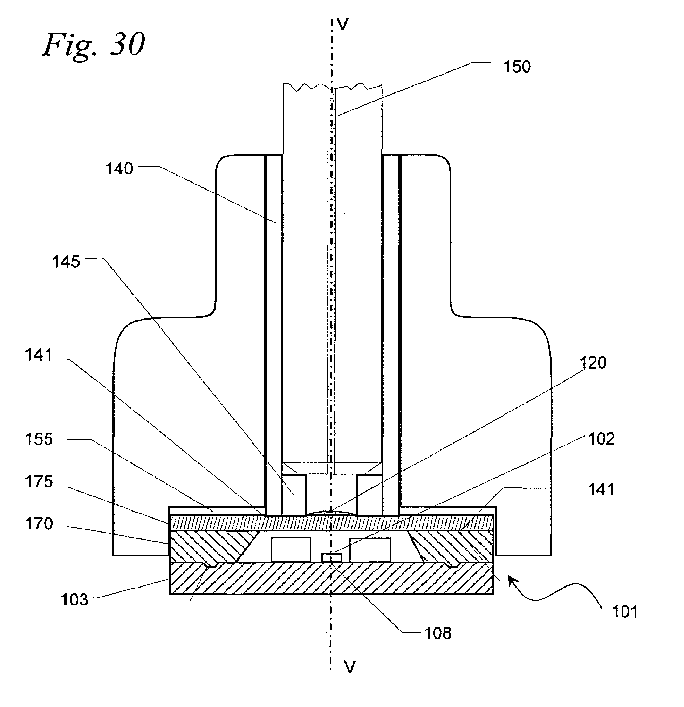

It is also possible to envisage further embodiments of the package and of the electro-optic module according to the present invention, as shown in figures 18 to 30. In the following description, numbers from 100 will be used and, preferably, a 1 will be placed in front of the numbers used above to indicate corresponding parts.

According to such embodiments the package 101 has advantageously a substantially flat sandwich-like structure,, and it comprises a bearing element 103 with an overlying closing element 3, preferably realised on different silicon layers. The integral bearing element 103, has, in plan, a substantially square-shaped first portion 126a next to a second portion 126b, which allows the housing of first electric connection terminals 129.

Advantageously, the first portion 126a has a vertical axis V-V. The term vertical is used with reference to the orientation of the package 101 in the annexed figures.

The bearing element 103 has an upper surface 104 which, in the first portion 126a, comprises a metallic pad 108, centrally arranged with respect to the axis V-V and a pair of pads 109a and 109b, each arranged symmetrically with respect to the pad 108, all pads being made square-shaped in the figure embodiment and apt to enable the positioning and fixing, by welding, of electro-optic active elements 102, 110 and 111. Preferably, the pad 108 and the pair of pads 109a and 109b are realised by means of photolithography.

Advantageously, on the upper surface 104 of the bearing element 103 a plurality of metallic tracks 128 is realised, each apt to connect first terminals 129, realised on the second portion 126b, with second terminals 149 realised in the proximity of the pad 108 and of the pair of pads 109a and 109b.

The metallic tracks 128, suitably realised by means of a metallisation step, carry high frequency signals, and thus they must be suitably shaped.

Advantageously, the upper surface 104 of the bearing element 103 has a crown 124 having an inner edge 124a and an outer edge 124b, square-shaped in the figure embodiment, realised near a peripheral edge of the first portion 126a of the bearing element 103, preferably realised by deposition of a dielectric material layer.

Advantageously, the upper surface 104 has a first metallisation loop 107 that is square-shaped and placed on top of the crown 124.

In this way, the crown 124 is interposed between the plurality of metallic tracks 128 and the first metallisation loop 107, thus preventing electric interferences during the operative step of the package 101.

According to the present embodiment, the plurality of metallic tracks 128 is placed on the same upper surface 104 whereon active components 102, 110 and 111 are installed.

As it can be seen from figure 18, the upper surface 104 has four alignment seats 106 made internally to the first loop 107, in proximity of its four corners and preferably obtained by anisotropic wet etch.

Advantageously, the package 101 comprises the closing element 113 which, according to a preferred embodiment, comprises a first component 170 and a second component 175, juxtaposed. The first component 170, realised on a silicon substrate, is flat and has dimensions such that it can overlie exactly over the first portion 126a of the bearing element 103 along the axis V-V.

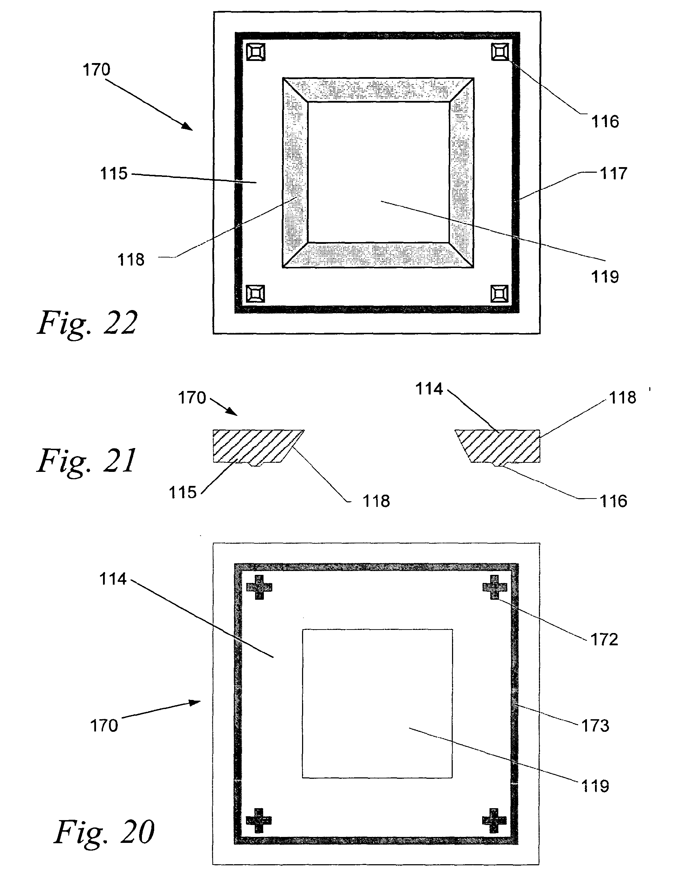

In particular, the first component 170, as it can be seen in figures 20, 21 and 22, has an upper surface 114 and a lower surface 115.

The lower surface 115 has four projections 116 of a shape conjugated to the alignment seats 106, a second metallisation loop 117 juxtaposed to the first loop 107, thus ensuring, in a simple and lasting manner, the reciprocal and hermetic positioning along the axis V-V between the first component 170 and the bearing element 103.

The first component 170 also has a cavity 118 passing between the lower surface 115 and the upper surface 114, centrally arranged along the axis V-V and frustum of pyramid shaped originating from the lower surface 115.

Advantageously, the upper surface 114 has four first alignment markers 172 each placed near each one of the four corners of the first component 170. In the indicated embodiment, the four first markers 172 have a cross-like shape, each of them defining four quadrants of equal size.

The upper surface 114 also comprises a third metallisation loop 173 placed between the peripheral edge and the first four markers 172.

Advantageously, the first component 170 has a thickness s greater than a maximum height h between the active elements 102, 110 and 111.

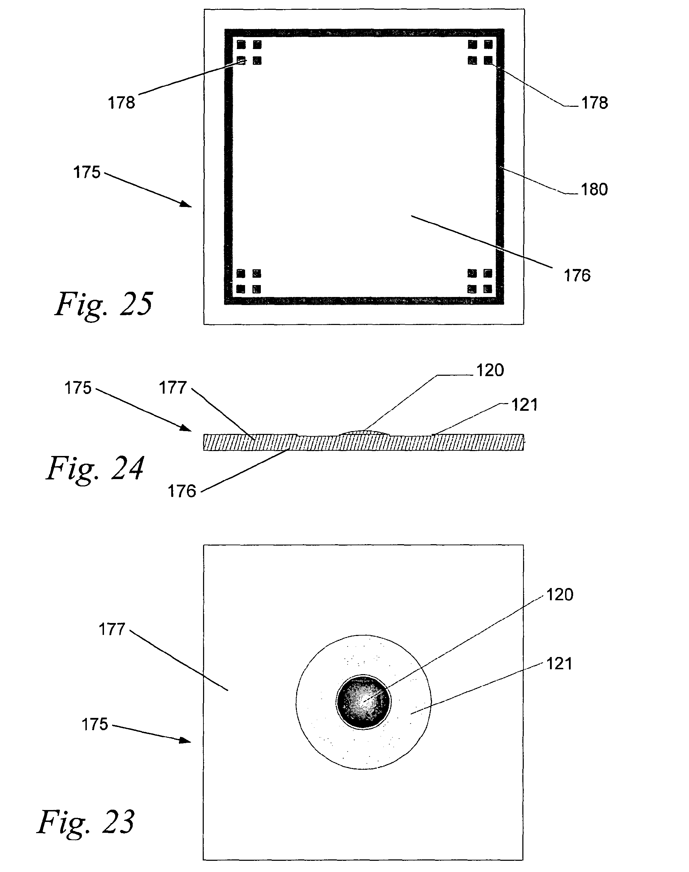

The second component 175 of the closing element 113 is substantially flat, as it can be seen in figures 23, 24 and 25, and preferably made of transparent material, in the spectral region wherein silicon is opaque, preferably glass or quartz.

The second component 175 has a lower surface 176 and an upper surface 177.

The lower surface 176 comprises four second markers 178, each comprising four quadrants equal and complementary to each of the four markers 172 and such that they realise, when overlain, a continuous quadrant. In such way, during the assembly step, the first markers 172 and the second markers 178 ensure, in a simple and lasting manner, the reciprocal positioning between the first component 170 and the second component 175.

It should be noted that the shape of the markers 178 depends only on the alignment machines used and that it is absolutely arbitrary.

Moreover, the lower surface 176 comprises a fourth metallisation loop 180 placed between a peripheral edge and the four second markers 178, such fourth loop 180 being superimposable onto the third loop 173 of the first component 170 and thus ensuring a hermetic closure.

In such way, the closing element 113 and the bearing element 103 define a closed housing seat 123 for the active elements 102, 110 and 111.

Moreover, the coupling between the first metallisation loop 107 and the second metallisation loop 117 ensures the hermetic closure between the bearing element 103 and the closing element 113 and thus the hermetic sealing of the housing seat 123 they define.

The second component 175 has an upper surface 177, a centrally placed lens 120 and a recess 121, preferably circular, arranged in axial alignment and peripherally with respect to the lens 120 itself.

The lens 120 can be refractive or diffractive depending on the typology of package 101 to be realised and it is obtained by means of known techniques.

The recess 121 can be realised simultaneously with the lens 120 or in a subsequent step provided that it is arranged axially with respect to the lens 120 and to the second markers 178.

In such way, the alignment of the bearing element 103 with the first component 170, realised by means of the four projections 116 inserted in the four seats 106, and the alignment of the first component 170 with the second component 175, realised by means of the second markers 178 complementary to the first markers 172, ensure the optical coupling between the electro-optic active element 102 arranged in the hermetic housing seat 123 and the lens 120 the along axis V-V. In other words, the package 101 thus realised ensures an alignment between the electro-optic active element 102 and the lens 120 with tolerances of the photolithographic type.

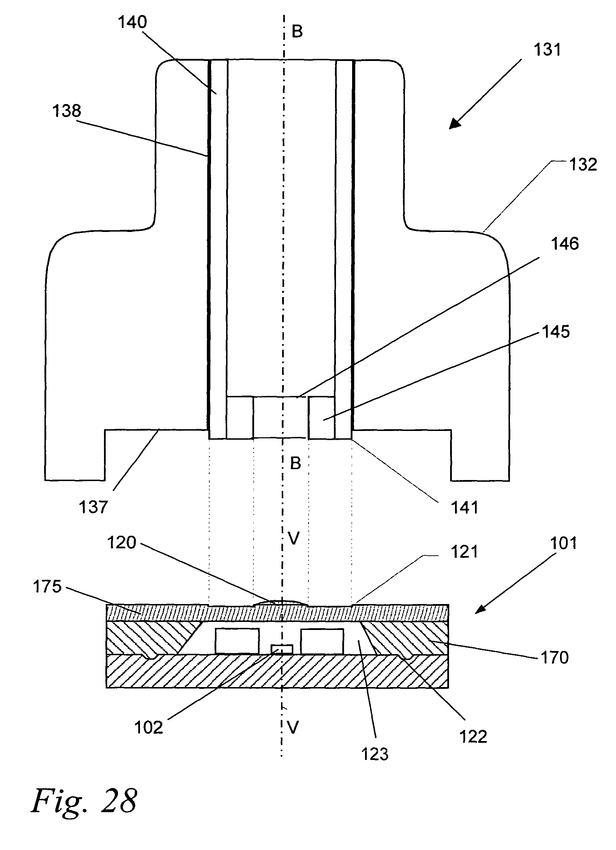

The package 101 is associated with an optical fibre, globally indicated with 150, by means of a casing 131 completely similar to the one described above in order to realise an electro-optic module 130 as shown in figures 28, 29 and 30. The casing 131 preferably has a symmetry axis B-B.

In the case of the casing 131 the same numbers used in the previous description, with a 1 placed in front, will be used The package 101 is axially inserted, along the axis B-B in a box-like seat 136 of a bearing body 132 with the upper surface 177 of the second component 175 of the closing element 113 facing an inner surface 137 of the bearing body 132. In such way, the axis B-B coincides with the axis V-V.

The casing 131 has a sleeve 140 which can be axially inserted in a suitable receptacle 138 realised along the axis B-B, which puts the inner surface 137 in communication with the opposite end of the body 132. The sleeve 140, apt to allow the insertion of an optical fibre 150, is longer than the receptacle 138 and projects, below, by a prefixed amount "s".

The casing 131 also has a spacer 145 fittingly inserted from the lower end of the sleeve 140. The spacer 145 has a central hole the diameter of which is equal to the diameter of the lens 120 of the package 101 and a height equal to the axial distance of the position of an image plane of the lens 120.

The package 101 is partially and axially inserted in the box-like seat 136 and, in such way, the sleeve 140 and the spacer 145 are partially housed in the recess 121. The box-like seat 136, the sleeve 140 and the spacer 145 form reciprocal optical coupling and aligning means 122 between the package 101 and the casing 131.

An air space 155 is defined between the upper surface 177 of the package 101 and the inner surface 137 of the body 132.

Thus, the bearing body 132 can be suitably fixed to the package 101 by means of the welding paste or resin, not indicated in the figures and placed in the air space 155.

Advantageously, the second component 175 of the closing element 113 made of transparent material is used when the wavelength of the light pulses transmitted along the optical fibre 150 approaches the visible spectrum or in the first window of the optical fibres.

Finally, the invention relates to a method for assembling a housing package of at least one electro-optic active element shown with reference to figures 1 to 10.

The assembled package is the one shown in figure 1 and, hereafter, the same numeric references will be used to indicate corresponding parts.

In its more general form, the assembly method according to the invention comprises the following steps:
- providing a bearing element 3 for an electro-optic active element 2;
- placing such electro-optic active element 2 on the bearing element 3 by means of a pick-and-place machine;
- surmounting the bearing element 3, in axial alignment, with a closing element 13;
- sealing the closing element 13 on the bearing element 3 with hermetic closure means to define a hermetically sealed housing seat 23.

In particular, making reference to the embodiment shown in figures 1 to 10, the assembly method according to the invention includes the following steps:
- providing a bearing element 3 realised on a silicon substrate, comprising, on an upper surface 4, at least one centrally arranged metallic pad 8 and a pair of metallic pads 9a and 9b, each arranged symmetrically with respect to the pad 8, all the pads being realised by means of photolithographic techniques.

In particular, the bearing element 3 has a plurality of vias 12 arranged peripherally to the pad 8 and to the pair of pads 9a and 9b, passing between the upper surface 4 and the lower surface 5 and suitably filled with dielectric material, a first metallisation loop 7 realised near a peripheral edge and four alignment seats 6 made internally to the first loop 7 each near the four corners thereof.

The method further includes the steps of:
- placing and fixing by welding an electro-optic active element 2 on the first pad 8 and similarly a second 10 and a third 11 electro-optic active element on the pair of pads 9a and 9b. In particular, the placing and fixing of the active elements 2, 10 and 11 occurs using of a pick-and-place machine.
- axially surmounting the bearing element 3 with a closing element 13, again made of a silicon substrate and comprising, on a lower surface 15, a centrally arranged cavity 18 apt to define a closed housing seat 23 for the electro-optic active element 2.

In the case that the closing element 13 is composed of two or more elements, such as for example in the case of the closing element 113 of the above illustrated second embodiment, the assembly step includes the precautionary assembly of the closing element itself.

In particular, the closing element 13 comprises four projections 16, each arranged near the four corners and a second metallisation loop 17 realised between the four projections 16 and a peripheral edge of the closing element 13. Moreover, the closing element 13 has an upper surface 14, a lens 20, refractive or diffractive depending on the typology of package 1 to be obtained, and a recess 21 realised peripherally to the lens 20 and arranged axially to the lens 20 itself and to the four projections 16.

The assembly method thus includes the step of:
- placing the welding paste in correspondence with the first metallisation loop 7 of the bearing element 3;
- juxtaposing the closing element 13 to the bearing element 3, the four projections 16 interacting with the four seats 6 and with the second loop 17 placed on top of the first loop 7.

In particular, these steps ensure a hermetic closure for the housing seat 23 and the presence of the projections 6 and of the seats 16 allows to avoid the insertion of the welding paste on the housing seat 23 itself. In fact, the projections 6 and the seats 16 are conjugated parts of the hermetic closing means between the bearing element 3 and the closing element 13. Moreover, the lens 20, centrally arranged with respect to the four projections 16, ensures an axial alignment between the electro-optic active element 2 and the lens itself. The assembly method according to the present invention has the remarkable advantage that it may be realised at the wafer level thus obtaining a considerable reduction in time and costs..

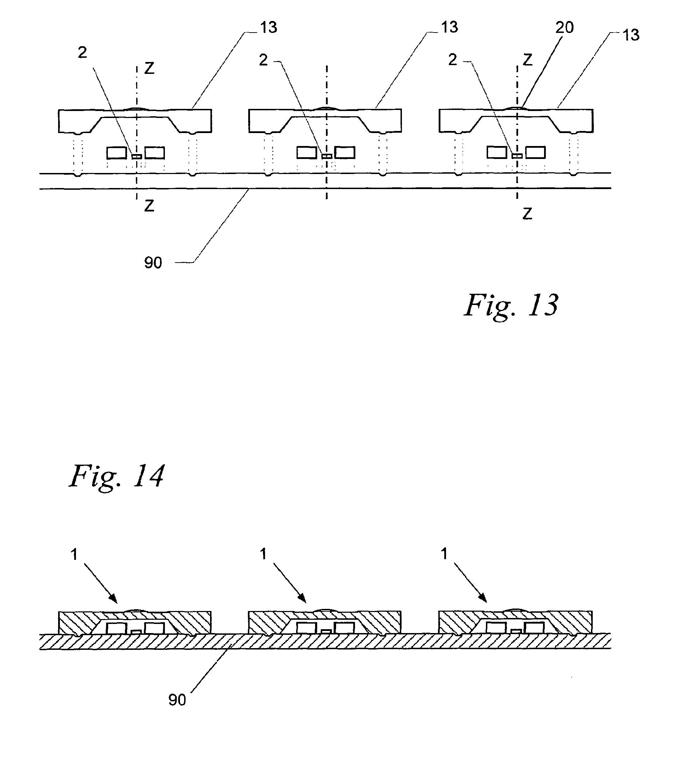

Moreover, the package alignment test can also be realised at the wafer level, as shown in figures 13 to 17.

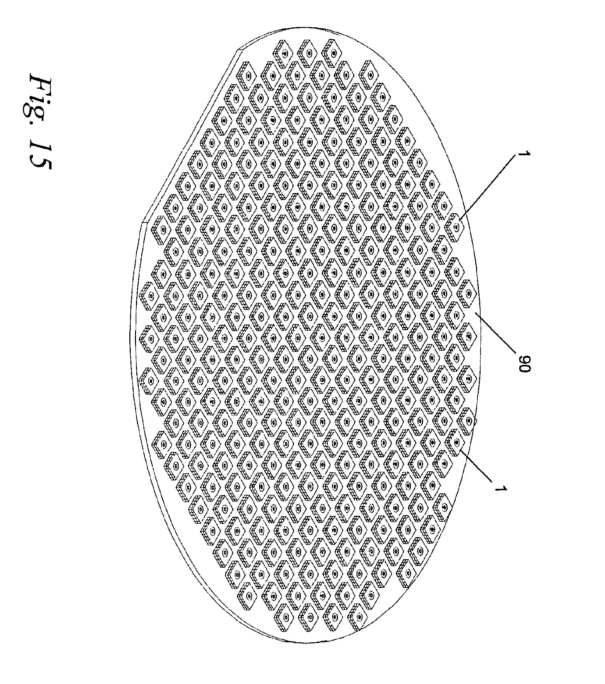

In particular, as it can be seen from figure 13, a plurality of bearing elements 3 are realised on a wafer 90, electro-optic active elements 2, 10 and 11 being placed and fixed on each of them, by welding, by advantageously using a pick-and-place machine. The electro-optic active element 2 is axially arranged with respect to axis Z-Z. Some welding paste is then placed in correspondence with the first metallisation loop 7 and the closing elements 13 are coupled and aligned, by placing the projections 16 in correspondence with the seats 6. An alignment of the lens 20 on a same axis Z-Z and hermetic closure of the housing seat 23 are thus obtained. The wafer obtained with the hermetic packages according to the invention is shown in figure 15.

At this point, it is possible to carry out the alignment test, which varies depending on whether the package is of the type indicated by 1 or the embodiment indicated by 101.

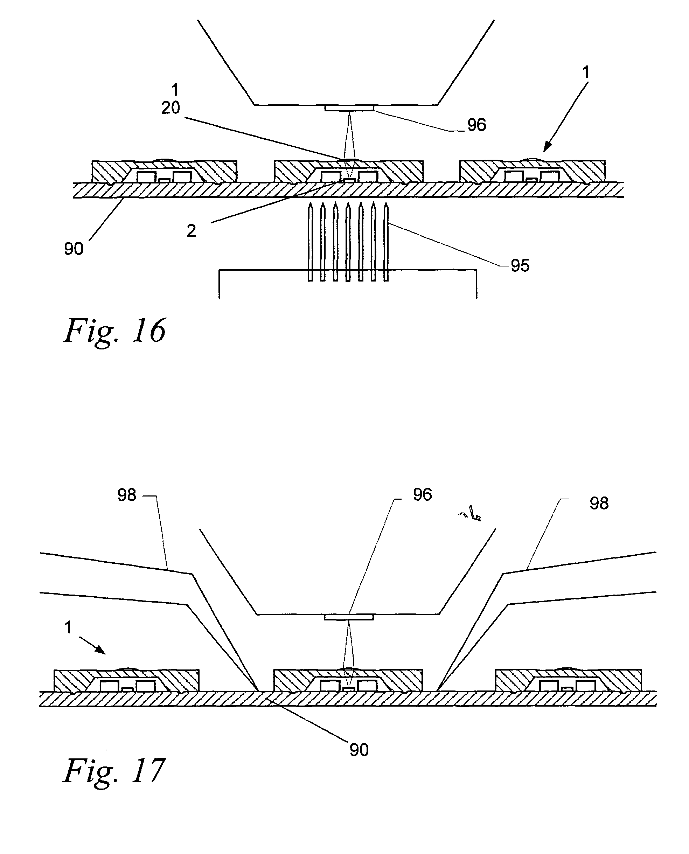

Figure 16 shows an alignment test in the case of the package 1, wherein the electric connections are realised by means of the vias 12. In this case, a plurality of pins 95 or so-called vertical contact probes are placed in correspondence with the lower surface 5 of the bearing element 3, whereas the insertion or extraction of the light is carried out by means of an optical head 96 placed in correspondence with the upper surface 14 of the closing element 13. In particular, the optical head 96 essentially comprises a receiver equipped with a suitable optical picking up apparatus in the case wherein the electro-optic element is a laser or a LED, or a transmitter with a suitable optical apparatus, for example an optical fibre, in the case that the electro-optic element is a photo-detector.

Figure 17 shows the alignment test in the case of the package 101 wherein the electrical connections are on the same surface whereon the electro-optic active elements 102, 110 and 111 are installed.

In this case, a plurality of pins 98 or so-called cantilever contact probes are used. As previously seen, the light pulses are detected or introduced through the optical head 96.

The main advantage of the housing package for at least one electro-optic active element according to the present invention is that of having a sandwich-like structure realised by bearing element 3 being juxtaposed to the closing element 13, which defines the hermetically closed housing seat 23.

Moreover, a further considerable advantage of the package thus realised is that of having coupling and aligning means 22, comprising conjugated projections 16 and conjugated seats 6 realised by means of photolithographic techniques, which make the alignment between the lens 20 and the electro-optic active element 2 reliable up to photolithographic levels.

Moreover, the interaction of the first loop 7 and of the second metallisation loop 17 makes the closure of the package hermetic and thus the hermetic sealing of the housing seat 23.

Advantageously, the coupling and aligning means 22 interposed between the metallisation loops and the housing seat 23 further serve as boundary for the expansion of a welding paste or resin deposited therebetween, maintaining the housing seat 23 itself free.

A main advantage of the electro-optic module realised according to the present invention is that the casing 31 and the package 1 thus realised have reciprocal coupling and aligning means which allow to align, in a reliable way, an optical fibre 50 with an electro-optic element 2 housed in package 1.

Another advantage is due to the fact that the coupling and aligning means are realised by means of suitable shapes of the casing and of the package, thus allowing a simple and effective alignment.

Moreover, the electro-optic module is freely associated to the optical fibre used thanks to the spacer 45 which allows to realise an abutting plane perfectly aligned with the electro-optic element without having to carry out active alignments during the assembly.

A further advantage is due to the fact that the assembly, both as regards the package and the electro-optic module, can occur by using standard automated machinery which allow to maintain a high reliability of the optical alignment necessary for the optical fibre transmission in the field of telecommunications.

The assembly method, as well as the alignment tests, is thus simple, reliable and can be realised at low cost.

## Claims

1. Package (1) for housing at least one electro-optic active element (2) for transmission by means of optical fibre (50) of the type comprising a bearing element (3) for said at least one electro-optic active element (2) **characterised in that** it is sandwich-like structured comprising a closing element (13) associated with said bearing element (3) by means of suitable aligning and coupling means (22) and apt to define a hermetically closed housing seat (23), said closing element (13) housing a lens (20) in axial alignment with said electro-optic active element (2).

2. Package according to claim 1, **characterised in that** said coupling and aligning means (22) have at least one alignment seat (6) placed on an upper surface (4) of said bearing element (3) and at least one projection (16) realised on a lower surface (15) of said closing element (13) of a shape conjugated to said housing seat (6).

3. Package according to claim 2, **characterised in that** said coupling and aligning means comprise a first metallisation loop (7) realised on said upper surface (4) of said bearing element (3) and a second loop (17) realised on said lower surface (15) of said closing element (13).

4. Package according to claim 3, **characterised in that** said closing element (13) has, on said upper surface (14), a lens (20) and, peripherally to said lens (20), a recess (21) axially centred with respect to an alignment axis Z-Z between said at least one electro-optic active element (2) and said lens (20).

5. Package according to claim 4, **characterised in that** said recess (21) is formed in the shape of a circular crown.

6. Package according to claim 4, **characterised in that** said upper surface (4) of said bearing element (3) has a plurality of aligning seats (6) realised symmetrically with respect to said alignment axis Z-Z and arranged internally to said first metallisation loop (7).

7. Package according to claim 6, **characterised in that** said alignment seats (6) have a square-based frustum of pyramid shape originating from said upper surface (4).

8. Package according to claim 1, **characterised in that** said bearing element (3) and said closing element (13) are realised on different silicon substrates.

9. Package according to claim 6, **characterised in that** said closing element (13) has, on said lower surface (15), a plurality of projections (16) realised symmetrically with respect to said axis Z-Z, in a corresponding position and in a shape conjugated with said alignment seats (6) realised on said upper surface (4) of said bearing element (3).

10. Package according to claim 1, **characterised in that** said closing element (13) has, on a lower surface (15), a cavity (18) axially centred with respect to an alignment axis Z-Z between said at least one electro-optic active element (2) and said lens (20) and apt to realise said housing seat (23) for said at least one electro-optic active element (2).

11. Package according to claim 10, **characterised in that** said cavity (18) has a square-based frustum of pyramid shape with a depth p greater than a height h of said at least one electro-optic active element (2).

12. Package according to claim 11, **characterised in that** said cavity (18) has an inner surface (19) coated with a non-reflective material.

13. Package according to any of the preceding claims, **characterised in that** said bearing element (3) has, on said upper surface (4), a positioning and fixing metallic pad (8) of said at least one electro-optic active element (2).

14. Package according to claim 13, **characterised in that** said upper surface (4) has a further pair of positioning and fixing pads (9a, 9b) respectively of a second and of a third electro-optic active element (10, 11) housed in said bearing element (3).

15. Package according to claim 14, **characterised in that** said bearing element (3) has, peripherally to said pad (8) and to said pair of pads (9a, 9b) a plurality of vias (12) passing between said upper surface (4) and said lower surface (5) apt to realise electric connections.

16. Package according to claim 14, **characterised in that** said bearing element (3) has a substantially squared first portion (126a), next to a second portion (126b), which allows the housing of first electric connection terminals (129), said first portion (126a) housing said metallic pad (8) and said pair of pads (9a, 9b) and a plurality of metallic tracks (128) apt to connect said first terminals (129) with second terminals (149) arranged near said pad (8) and said pair of pads (9a, 9b).

17. Package according to claim 15, **characterised in that** said bearing element (3) has a square-shaped crown (124) realised near a peripheral edge of said first portion (126a) and, arranged on top of said crown (124), said first metallisation loop (7).

18. Package according to claim 14, **characterised in that** said closing element (13) comprises a first component (170) and a second component (175) being juxtaposed, said first component (170) being realised with a flat shape and of such size as to be exactly overlapped onto said first portion (126a), said first component (170) having said projections (16) of conjugated shape to said alignment seats (6), said second metallisation loop (17) being juxtaposed to said first loop (7) of said bearing element (3).

19. Package according to claim 18, **characterised in that** said first component (170) has a cavity (118) passing between a lower surface (115) and a centrally arranged upper surface (114) being frustum of pyramid shaped originating from said lower surface (115).

20. Package according to claim 19, **characterised in that** said upper surface (114) has first alignment markers (172) each arranged near each corner of said first component (170) and a third metallisation loop (173) arranged between a peripheral edge and said markers (172), said first component (170) having a thickness s greater than a maximum height h between active elements (2, 10, 11) to be housed in said package.

21. Package according to claim 18, **characterised in that** said second component (175) of said closing element (13) is substantially flat and preferably made of transparent material, in the spectral region wherein silicon is opaque, it has a lower surface (176) comprising second markers (178) complementary to said first markers (172) and a fourth metallisation loop (180) juxtaposed to said third loop (173) of said first component (170).

22. Package according to claim 20, **characterised in that** said second component (175) is preferably made of glass or quartz.

23. Package according to any of the preceding claims, **characterised in that** said electro-optic active element (2) is an element chosen among a VCSEL, a PIN, a photo-detector, an APD, a LED.

24. Electro-optic module (30) of the type comprising a package (1) housing at least one electro-optic active element (2) associated with a casing (31) comprising a receptacle (38) housing an optical fibre (50) **characterised in that** said package (1) and said casing (31) have coupling and aligning means (22) apt to associate said casing (31) with said package (1) hermetically

25. Electro-optic module (30) according to claim 24, **characterised in that** said casing (31) comprises a bearing body (32) with a longitudinal axis A-A, said bearing body (32) having near a lower end a parallelepiped-shaped box-like seat (36) apt to fittingly house at least part of said package (1).

26. Module (30) according to claim 24, **characterised in that** said box-like seat (36) defines on said bearing body (32) a flat inner surface (37), perpendicularly arranged to said longitudinal axis A-A and that said receptacle (38) is axially arranged along said longitudinal axis A-A putting said inner surface (37) in communication with an upper end of said bearing body (32).

27. Module according to claim 24, **characterised in that** said casing (31) has an axial alignment sleeve (40) for said optical fibre (50), said sleeve (40) being precisely inserted in said receptacle (38) and projecting from said inner surface (37) of a suitable value s.

28. Module according to claim 27, **characterised in that** said value s is greater than a depth d of said recess (21) realised on said closing element (13) of said package (1).

29. Module according to claim 24, **characterised in that** said casing (30) comprises a cylindrical spacer (45) fittingly inserted at a lower end (41) of said sleeve (40) and aligned below it, said spacer (45) having an axial hole (46) of the same size as the diameter of a lens (20) of said package (1) and having a height equal to the axial distance of the position of an image plane of said lens (20).

30. Module according to claim 24, **characterised in that** it has an air space (55) between an upper surface (14) of said package (1) and an inner surface (37) of said receptacle (38).

31. Module according to claim 30, **characterised in that** said bearing body (32) is fixed to said package (1) by means of the welding paste or resin placed in correspondence with said air space (55).

32. Method for assembling a package (1) housing at least one electro-optic active element (2) for transmission by means of optical fibre (50), said method comprising the steps of:
- providing a bearing element (3) of said package (1);
- placing said electro-optic active element (2) on said bearing element (3) by means of a pick-and-place machine;
- surmounting said bearing element (3)with a closing element (13) of said package (1), said bearing and closing elements being in mutual axial alignment;
- sealing said closing element (13) on said bearing element (3) by means of hermetic closure means to define a hermetically closed housing seat (23) of said electro-optic active element (2).

33. Assembly method according to claim 32, further comprising a photolithographic realisation step on said bearing element (3) of at least one positioning and fixing pad (8) of said at least one electro-optic active element (2) and **characterised in that** said electro-optic active element (2) is placed in correspondence with said metallic pad (8).

34. Assembly method according to claim 33, wherein said one photolithographic realisation step further realises a pair of positioning and fixing metallic pads (9a, 9b) of at least a second and a third electro-optic active element (10, 11), said pair of pads (9a, 9b) being arranged symmetrically with respect to said metallic pad (8) and **characterised in that** said at least a second an a third electro-optic active element (10, 11) are placed in correspondence with said pair of metallic pads (9a, 9b) by means of a pick-and-place machine.

35. Assembly method according to claim 32, wherein said one surmounting step, in axial alignment, of said bearing (3) and closing (13) elements comprises an aligning step of a plurality of projections (16) of said closing element (13)with a plurality of seats (6) of said bearing element (3), said projections (16) and seats (6) having a conjugated shape.

36. Assembly method according to claim 32, wherein said one surmounting step, in axial alignment, of said bearing (3) with said closing (13) element comprises a surmounting step of a first metallisation loop (7) defined in said bearing element (3) with a second loop (17) defined in said closing element (13).

37. Assembly method according to claim 36, further comprising a deposition step of welding paste in correspondence with said first metallisation loop (7) before said surmounting step of said first with said second metallisation loop (7, 17).

38. Assembly method according to claim 32, wherein said surmounting step, in axial alignment of said bearing element (3), with a closing element (13) of said package (1) comprises a positioning step of a plurality of elements (170, 175) of said closing element (113).

39. Assembly method according to claim 32, further comprising a positioning step of a lens (20) on said closing element (13) in axial alignment with said electro-optic active element (2) on said bearing element (3).

40. Assembly method according to any of claims 32 to 39, wherein all the steps of the method are realised on a wafer comprising a plurality of packages (1).
